# EUROPEAN PATENT APPLICATION

(11) **EP 2 591 985 A1**
(43) Date of publication of application: **15.05.2013**
(21) Application number: 11844419.9
(22) Date of filing: 18.08.2011
(51) Int. Cl.: B62D 25/02, B60J 1/10

(54) **PANEL-JOINING STRUCTURE**

(30) Priority: 03.12.2010 JP 2010270062
(71) Applicant: Toyota Shatai Kabushiki Kaisha, Kariya-shi, Aichi 448-0002 (JP)
(72) Inventor: KATO Akira, Kariya-shi Aichi 448-0002 (JP)
(74) Representative: Chettle, Adrian John
(86) International application number: PCT/JP2011/068646
(87) International publication number: WO 2012/073557

(57) **Abstract**

A bearing surface portion (25) of an inner panel (20) is set as a welding portion such that the bearing surface portion (25) of the inner panel (20) can be welded to an outer panel (40) in a face contact condition. When the bearing surface portion (25) of the inner panel (20) is brought into face contact with an opposite flat plate portion (41) of the outer panel (40), an adhesive application clearance into which adhesive (T2) can be fed can be formed between a plate-shaped base body (21) and the opposite flat plate portion (41). As a result, it is possible to provide the welding portion in which the outer panel (40) and the inner panel (20) are welded to each other while being brought into contact with each other. Further, the clearance into which the adhesive (T2) can be fed can be formed between the inner panel (20) and the outer panel (40).

## Description

### TECHNICAL FIELD

The present invention relates to a body panel bonding structure in a vehicle rear compartment of each of van-type vehicles respectively designed as a glass van and a panel van.

### BACKGROUND ART

In a conventionally known van-type vehicle, a vehicle rear compartment is widened so as to be effectively utilized as a luggage room. Two types of vehicles are known as the van-type vehicle. One of them is a vehicle that is known as a glass van of which the vehicle rear compartment can be used as a passenger room. The other of them is a vehicle that is known as a panel van of which the vehicle rear compartment can be specially used as the luggage room only. The glass van has glass windows that are attached to vehicle sides for increased visibility and for an emergency escape. To the contrary, the panel van does not have such glass windows. That is, the vehicle sides are covered by metal panels. Thus, the vehicle sides of these vans are different from each other in the presence or absence of the glass window. However, the vehicle sides are the same in that they can be formed by bonding inner panels positioned in a vehicle interior and outer panels positioned in a vehicle exterior.

Meanwhile, it is desirable that the inner panels constituting the vehicle sides can be commonly used for the both vehicles of the glass van and the panel van in order to reduce manufacturing costs. Patent Document 1 described below discloses inner panels that can be commonly used for the both vehicles of the glass van and the panel van. Because the inner panels disclosed therein can be commonly used for the both vehicles of the glass van and the panel van, the costs for manufacturing the vehicle sides of the vehicle rear compartment can be reduced.

### PRIOR ART DOCUMENT

### PATENT DOCUMENT

Patent Document 1: Japanese Laid-Open Patent Publication No. 2010-162986

### SUMMARY OF THE INVENTION

### PROBLEMS TO BE SOLVED BY THE INVENTION

On the other hand, in the glass van described above, spot welding is used for bonding the inner panels and the outer panels. However, if the spot welding is used for bonding the inner panels and the outer panels in the panel van described above as in the glass van, spot-welded portions will be visible from the outside. This may lead to a deteriorated appearance of the vehicle sides. In view of this, in the panel van, it is desirable that the inner panels and the outer panels are bonded to each other by adhesive applied therebetween without using the spot welding.

In the inner panels taught by Patent Document 1, the outer panels can be bonded to the inner panels by the spot welding. However, the inner panels cannot form clearances between the inner panels and the outer panels such that the adhesive can be applied therebetween. That is, the adhesive cannot be applied between the inner panels and the outer panels in order to bond the same to each other.

The present invention has been made in order to solve the problems described above. Accordingly, it is an object of the present invention to provide a body panel bonding structure in a vehicle rear compartment of each of both van-type vehicles designed as a glass van and a panel van, in which an inner panel has a welding portion on which the inner panel is welded to the outer panel, in which a clearance for an adhesive can be formed between the inner panel and the outer panel such that the inner panel and the outer panel can be bonded via the adhesive, and in which the inner panel can be commonly used for the both vehicles of the glass van and the panel van, so as to reduce manufacturing costs.

### MEANS FOR SOLVING THE PROBLEMS

In order to solve the problems described above, a panel bonding structure according to the present invention employs the following means.
A first invention of the present invention may provide a panel bonding structure for a vehicle designed as a glass van of which the side opening is provided with a glass and a vehicle designed as a panel van of which the side opening is covered by a panel, the structure being configure to bond an inner panel positioned in a vehicle interior and an outer panel positioned in a vehicle exterior each other around a circumference of an opening of the inner panel, wherein the inner panel has a plate-shaped base body extending along a vehicle side and a ledge-shaped bearing surface portion that is swollen toward the vehicle exterior from the plate-shaped base body, wherein in the vehicle designed as the glass van, the bearing surface portion is set as a welding portion that can be welded to the outer panel so as to bond the inner panel to the outer panel, and wherein in the vehicle designed as the panel van, the bearing surface portion is set as an adhesion control surface that can be brought into contact with the outer panel such that a clearance into which adhesive can be fed can be formed between the plate-shaped base body and the outer panel.

According to the panel bonding structure of the first invention, in the vehicle designed as the glass van, the bearing surface portion of the inner panel can be set as the welding portion to the outer panel. As a result, the inner panel can be bonded to the outer panel of the glass van by welding. Conversely, according to the panel bonding structure, in the vehicle designed as the panel van, the bearing surface portion of the inner panel can be set as the adhesion control surface that can be brought into contact with the outer panel. As a result, the bearing surface portion of the inner panel functioning as the adhesion control surface can be brought into contact with the outer panel, so that the clearance into which the adhesive can be fed can be formed between the plate-shaped base body of the inner panel and the outer panel. Therefore, the inner panel can be bonded to the outer panel of the panel van via the adhesive.
Thus, the inner panel can be bonded to the outer panel of the glass van by welding. Further, the inner panel can be bonded to the outer panel of the panel van via the adhesive. Therefore, the inner panel can be commonly used for the both vehicles designed as the glass van and the panel van, so as to reduce manufacturing costs.

A panel bonding structure of a second invention corresponds to the panel bonding structure of the first invention, wherein the outer panel of the vehicle designed as the glass van has an end edge that is formed by removing the outer panel in conformity with a shape of the glass, wherein the inner panel has an end edge portion formed as a bent-shaped portion that is capable of covering the end edge of the outer panel of the vehicle designed as the glass van in a bonded condition, and wherein the outer panel of the vehicle designed as the panel van has a stepped bent portion corresponding to the end edge portion of the bonded inner panel.
According to the panel bonding structure of the second invention, the end edge portion of the inner panel has the bent-shaped portion that is capable of covering the end edge of the outer panel of the glass van in the bonded condition. Therefore, the end edge of the outer panel of the glass van can be covered by the end edge portion of the inner panel, so as to not be exposed. Thus, in the vehicle designed as the glass van, the end edge portions of the inner panel and the outer panel can be defined by the bent-shaped portion of the inner panel. Further, the outer panel of the panel van has the stepped bent portion that is spaced from the end edge portion of the inner panel in the bonded condition. Therefore, the inner panel can be bonded to the outer panel without interfering therewith. Thus, the inner panel can be commonly used for the vehicles designed as the glass van and the panel van. In addition, in the vehicle designed as the glass van, the end edge portions of the outer panel and the inner panel can be defined by the end edge or the bent-shaped portion of the inner panel.

A panel bonding structure of a third invention corresponds to the panel bonding structure of the first or second invention, wherein a plurality of bearing surface portions are formed in the plate-shaped base body of the inner panel while being positioned separate from each other at intervals.
According to the panel bonding structure of the third invention, a plurality of bearing surface portions 25 of the inner panel 20 functioning as the welding portions or the adhesion control surfaces are formed in the plate-shaped base body while being positioned separate from each other. Therefore, in the vehicles designed as the glass van and the panel van, a plurality of bonding portions to the outer panels can be formed. As a result, the inner panel can be more reliably bonded to the outer panel.

### EFFECTS OF THE INVENTION

According to the panel bonding structure of the first invention, the inner panel can be bonded to the outer panel of the glass van by welding. Further, the inner panel can be bonded to the outer panel of the panel van via the adhesive. Therefore, the inner panel can be commonly used for the both vehicles designed as the glass van and the panel van, so as to reduce manufacturing costs.
According to the panel bonding structure of the second invention, the inner panel can be commonly used for the vehicles designed as the glass van and the panel van. In addition, in the vehicle designed as the glass van, the end edges of the outer panel and the inner panel can be defined by the end edge or the bent-shaped portion of the inner panel.
According to the panel bonding structure of the third invention, the inner panel can be more reliably bonded to the outer panel.

### BRIEF DESCRIPTION OF THE DRAWINGS

FIG. 1 is a side view of a van-type vehicle, which illustrates an entire appearance thereof.
FIG. 2 is a perspective view of a panel bonding structure of a van-type vehicle designed as a glass van.
FIG. 3 is a set of views, i.e., a sectional view taken along line A-A of FIG. 2 and a sectional view taken along line B-B of FIG. 2.
FIG. 4 is a perspective view of a panel bonding structure of a van-type vehicle designed as a panel van.
FIG. 5 is a set of views, i.e., a sectional view taken along line A-A of FIG. 4 and a sectional view taken along line B-B of FIG. 4.

### MODE FOR CARRYING OUT THE INVENTION

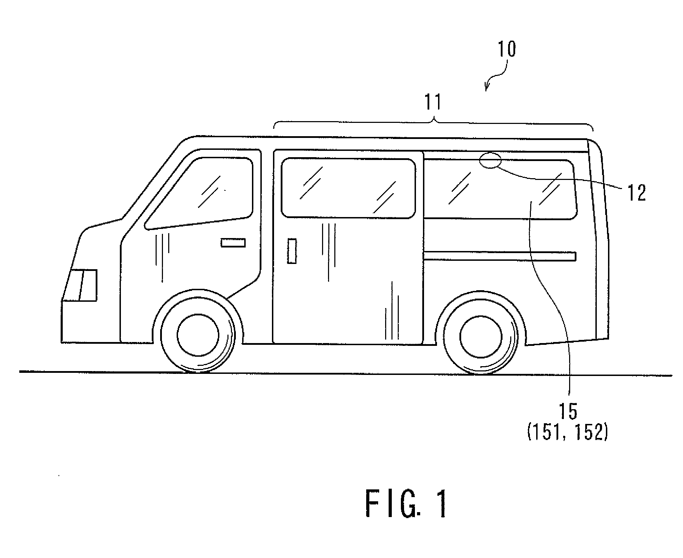

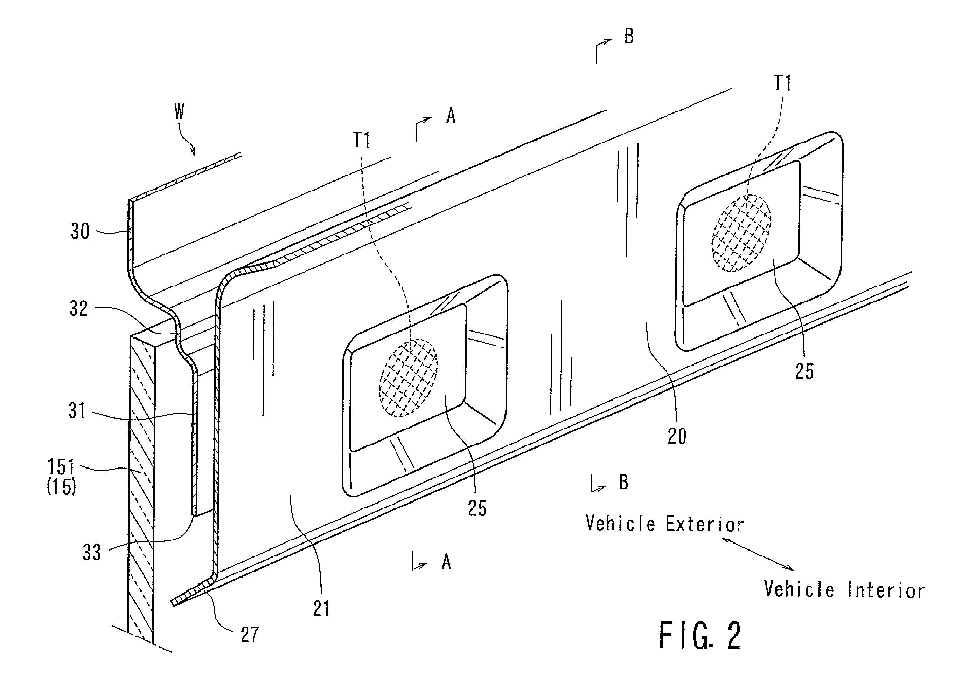

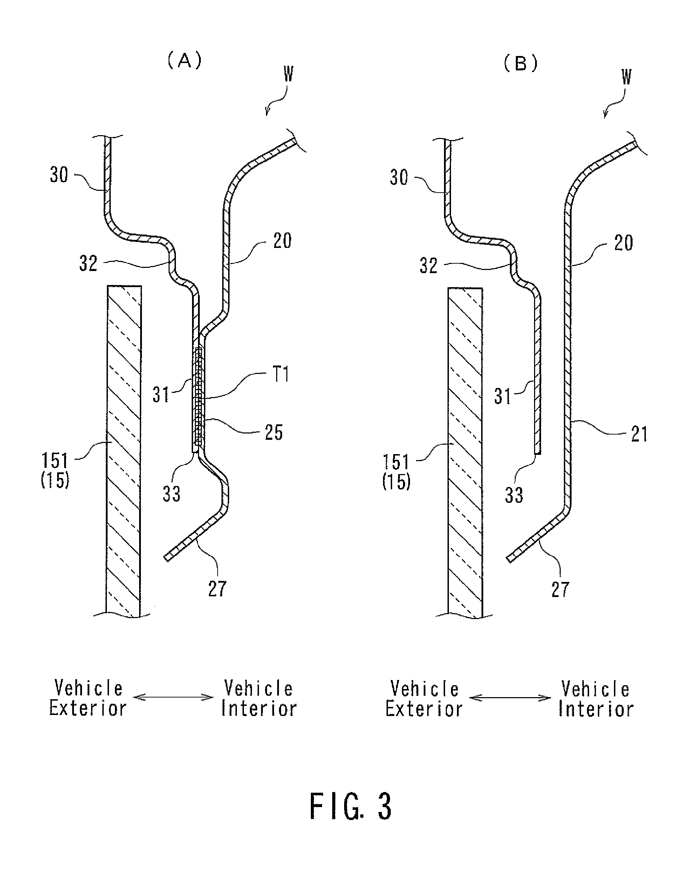

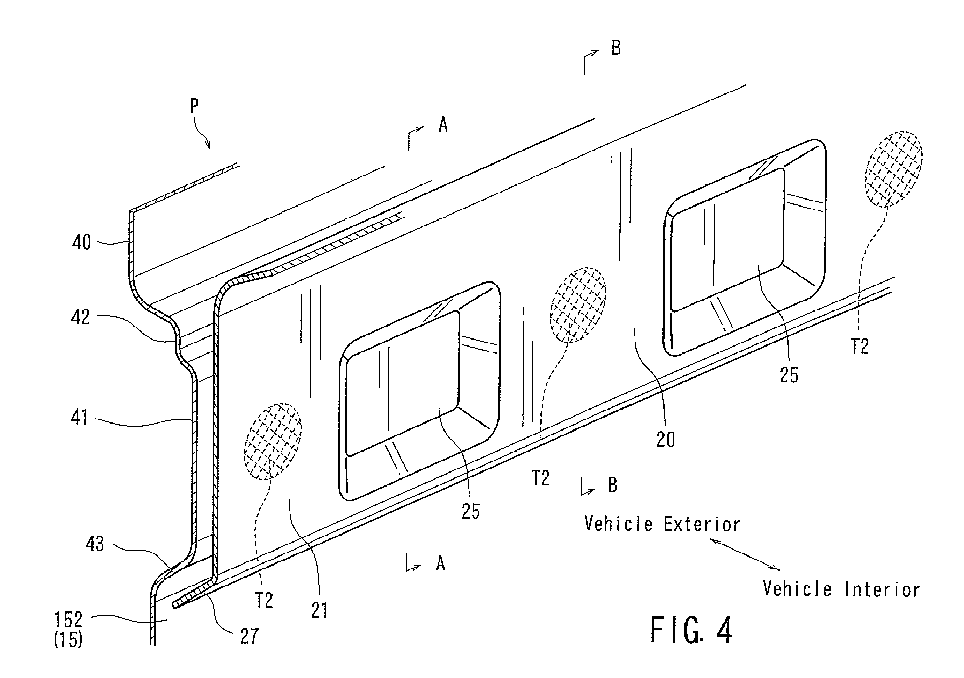

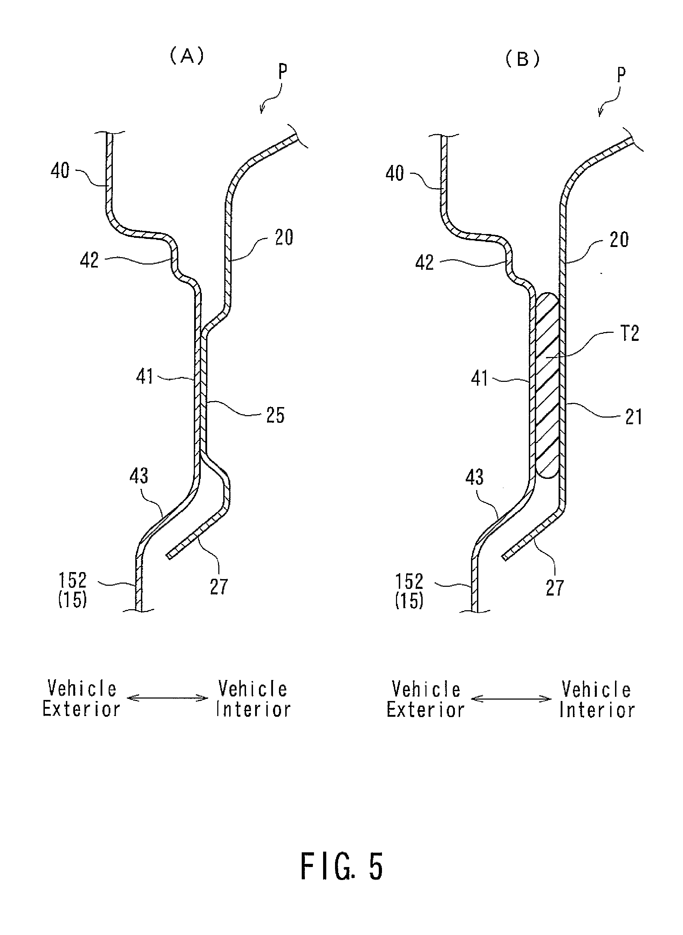

In the following, a mode for carrying out a panel bonding structure according to the present invention will be described with reference to the drawings. FIG. 1 shows an overall appearance of a van-type vehicle 10. The vehicle 10 is a so-called van-type vehicle in which a vehicle rear compartment (a portion indicated by reference numeral 11 in the drawings) is widened so as to be effectively utilized as a luggage room. The van-type vehicle 10 has a slide door, so that the vehicle rear compartment 11 can be opened and closed. There are two types of vehicles as the van-type vehicle 10. One of them is a vehicle that is known a glass van of which the vehicle rear compartment 11 can be used as a passenger room in addition to the luggage room. The other of them is a vehicle that is known as a panel van of which the vehicle rear compartment 11 can be specially used as the luggage room only. In particular, the vehicle designed as the glass van has a windowpane 151 attached to a window portion 15 thereof, so that the window portion 15 may be constructed of the windowpane 151. To the contrary, in the vehicle designed as the panel van, the window portion 15 of the vehicle is constructed of a panel window portion 152 of an outer panel 40. Further, the window portion 15 corresponds to a side opening in the present invention.
A panel bonding structure W described in detail with reference to FIGS. 2 and 3 is a structure that is used to form a frame periphery of the window portion 15 of the glass van, i.e., the wind portion 15 that is constructed of the windowpane 151. To the contrary, a panel bonding structure P described in detail with reference to FIGS. 4 and 5 is a structure that is used to form a frame periphery of the window portion 15 of the panel van, i.e., the wind portion 15 that is constructed of the panel window portion 152 of the outer panel 40. Further, each of the panel bonding structures W and P constitutes a part of a body that constitutes a vehicle side of the vehicle rear compartment 11 of the van-type vehicle, each of which structures corresponds to a structure that constitutes the frame periphery of the window portion 15 (a circumference of the side opening) in a portion 12 encircled by an ellipse in the vehicle rear compartment 11 of the vehicle 10 shown in FIG. 1.
In the following, the panel bonding structure W for the glass van and the panel bonding structure P for the panel van will be described separately.

### [Panel Bonding Structure W for Van-Type Vehicle Designed as Glass Van]

First, the panel bonding structure W for the van-type vehicle designed as the glass van will be described with reference to FIGS. 2 and 3. The panel bonding structure W may be used in a structure in which the window portion 15 of the vehicle 10 shown in FIG. 1 is formed by the windowpane 151. FIGS. 2 and 3 show the panel bonding structure W of the van-type vehicle designed as the glass van. That is, FIG. 2 is an enlarged perspective view of the portion encircled by the ellipse in FIG. 1. FIG. 3(A) is a sectional view taken along line A-A of FIG. 2. FIG. 3(B) is a sectional view taken along line B-B of FIG. 2. Further, in FIG. 2, only two of a large number of bearing surface portions 25 are shown as an enlarged view for easy understanding.
As shown in FIGS. 2 and 3, in the van-type vehicle designed as the glass van, the window portion 15 may be constructed of the windowpane 151. The panel bonding structure W is the structure for the frame periphery of the window portion 15 formed by the windowpane 151. The windowpane 151 extends along the vehicle side. In the panel bonding structure W, an inner panel 20 positioned in a vehicle interior and an outer panel 30 positioned in a vehicle exterior are bonded to each other. The outer panel 30 bonded to the inner panel 20 supports the windowpane 151 thereon via a glass window securing means (not shown) such as a securing molding member.

The inner panel 20 is a panel that is positioned in the vehicle interior in order to form the body of the vehicle 10. The inner panel 20 is a common part that can be commonly used for both of the glass van and the panel van which will be described below. The inner panel 20 has a plate-shaped base body 21 extending along the vehicle side. The plate-shaped base body 21 of the inner panel 20 is formed as a substantially flat plate extending along the frame periphery of the windowpane 151 described above.
The plate-shaped base body 21 has a plurality of bearing surface portions 25 that are formed along the frame periphery of the window portion 15 and positioned separate from each other at equal intervals. Each of the bearing surface portions 25 is formed as a ledge-shaped portion that is depressed or swollen from the plate-shaped base body 21 toward the vehicle exterior. That is, each of the bearing surface portions 25 is formed so as to have a substantially flat surface that faces the plate-shaped base body 21 as a bearing surface. The plurality of bearing surface portions 25 are formed so as to be positioned separate from each other at intervals. The bearing surface portions 25 are portions that can be brought into face contact with the outer panel 30. That is, the bearing surface portions 25 may be set as welding portions T1 that can be welded to an opposite flat plate portion 31 of the outer panel 30 while being held in face contact therewith when the inner panel 20 is bonded to the outer panel 30. Further, when the bearing surface portions 25 are brought into face contact with the opposite flat plate portion 31 of the outer panel 30, a clearance can be formed between the plate-shaped base body 21 and the opposite flat plate portion 31 of the outer panel 30 such that the plate-shaped base body 21 can be spaced from the opposite flat plate portion 31 without contacting each other. As will be described below, the bearing surface portions 25 of the inner panel 20 may function as portions that can be brought into face contact with an opposite flat plate portion 31 of an outer panel 40.

As shown in FIGS. 3(A) and 3(B), an inner periphery of the frame-shaped base body 21 is formed as an end edge 27 of the inner panel 20. A circumferential portion (an end edge portion) of the end edge 27 is formed as a bent-shaped portion that is capable of covering an end edge 33 of the outer panel 30 in an bonded condition. In particular, the end edge 27 of the inner panel 20 is bent toward the vehicle exterior, so as to cover the end edge 33 of the outer panel 30, which will be described below, without interfering with the windowpane 151.
Further, the outer panel 30 has the opposite flat plate portion 31 extending along the vehicle side, which is similar to the plate-shaped base body 21 of the inner panel 20 as described above. Similar to the plate-shaped base body 21, the opposite flat plate portion 31 of the outer panel 30 is formed as a substantially flat plate portion extending along the frame periphery of the windowpane 151 described above. The end edge 33 of outer panel 30 is formed in an inner periphery of the opposite flat plate portion 31. The end edge 33 is formed by removing of the outer panel 30 in conformity with a shape of the windowpane 151. The outer panel 30 has a portion (indicated by reference numeral 32) that is positioned on an opposite side of the opposite flat plate portion 31 from the end edge 33. The portion 32 is formed as a bent-shaped portion such that the windowpane 151 can be advantageously attached thereto.
Further, as described above, the opposite flat plate portion 31 of the outer panel 30 is configured such that the bearing surface portions 25 of the inner panel 20 can be brought into face contact therewith, which is shown in FIG. 3(A). The bearing surface portions 25 of the inner panel 20 that are held in face contact with the opposite flat plate portion 31 of the outer panel 30 are set as the welding portions T1. The outer panel 30 and the inner panel 20 are bonded to each other by welding the welding portions T1 to the opposite flat plate portion 31 of the outer panel 30. Further, when the bearing surface portions 25 of the inner panel 20 are brought into face contact with the opposite flat plate portion 31 of the outer panel 30, the clearance can be formed between the plate-shaped base body 21 of the inner panel 20 and the opposite flat surface portion 31 of the outer panel 30.

### [Panel Bonding Structure P for Van-Type Vehicle Designed as Panel Van]

Next, a panel bonding structure P of the van-type vehicle designed as the panel van will be described with reference to FIGS. 4 and 5. The panel bonding structure P may be used in a structure in which the window portion 15 of the vehicle 10 shown in FIG. 1 is formed by the outer panel 30. That is, although the window portion 15 is formed by the windowpane 151 in the van-type vehicle designed as the glass van, it is formed by the panel window portion 152 of the outer panel 30 in the van-type vehicle designed as the panel van. Therefore, the following description of the panel bonding structure P of the van-type vehicle designed as the panel van will be centered on the outer panel 40 which is different from the outer panel in the panel bonding structure W of the van-type vehicle designed as the glass van in shape. Further, the inner panel 20 of the panel bonding structure P of the van-type vehicle designed as the panel van is formed as a common part that can be used in the panel bonding structure W of the van-type vehicle designed as the glass van. That is, the inner panel 20 of the panel bonding structure P has the same structure as the inner panel 20 of the panel bonding structure W described above.
FIGS. 4 and 5 show the panel bonding structure P of the van-type vehicle designed as the panel van. That is, FIG. 4 is an enlarged perspective view of the portion encircled by the ellipse in FIG. 1. FIG. 5(A) is a sectional view taken along line A-A of FIG. 4. FIG. 5(B) is a sectional view taken along line B-B of FIG. 4. Further, similar to FIG. 2 described above, in FIG. 4, only two of the bearing surface portions 25 are shown.

The panel bonding structure P is the structure for the frame periphery of the window portion 15 formed by the panel window portion 152. The panel window portion 152 extends along the vehicle side. In the panel bonding structure P, the inner panel 20 positioned in the vehicle interior and the outer panel 40 positioned in the vehicle exterior are bonded to each other.
The outer panel 30 of the van-type vehicle designed as the glass van has the end edge 33 formed by removing the same and having a shape corresponding to the shape of the windowpane 151. To the contrary, the outer panel 40 of the vehicle designed as the panel van may extend without being removed.
Similar to the outer panel 30 of the vehicle designed as the glass van, the outer panel 40 of the vehicle designed as the panel van may have an opposite flat plate portion 41 extending along the vehicle side. Similar to the plate-shaped base body 21, the opposite flat plate portion 41 of the outer panel 30 is formed as a substantially flat plate portion extending along the frame periphery of the windowpane 151 described above. The panel window portion 152 of the outer panel 40 is formed in an inner periphery of the opposite flat plate portion 41. The panel window portion 152 of the outer panel 30 may constitute the window portion 15. The outer panel 30 has a portion (indicated by reference numeral 42) that is positioned on an opposite side of the opposite flat plate portion 31 from the panel window portion 152. The portion 42 is formed as a bent-shaped portion such that the windowpane 151 can be advantageously attached thereto. Further, the outer panel 40 has a stepped bent portion (indicated by reference numeral 43) formed between the opposite flat plate portion 41 and the panel window portion 152. The stepped bent portion is configured to be spaced from the end edge 27 of the inner panel 20 in a bonded condition. Further, as described above, the opposite flat plate portion 41 of the outer panel 40 is configured such that the bearing surface portions 25 of the inner panel 20 can be brought into face contact therewith. That is, the bearing surface portions 25 of the inner panel 20 can be set as adhesion control surfaces that can be brought into face contact with the opposite flat plate portion 41 of the outer panel 40 of the van-type vehicle designed as the panel van. Thus, as shown in FIG. 5(B), when the bearing surface portions 25 of the inner panel 20 are brought into face contact with the opposite flat plate portion 41 of the outer panel 40, a clearance (an adhesive T2 application portion) into which adhesive T2 is fed can be formed between the plate-shaped base body 21 of the inner panel 20 and the opposite flat surface portion 41 of the outer panel 40. When the adhesive T2 is applied between the plate-shaped base body 21 of the inner panel 20 and the opposite flat plate portion 41 of the outer panel 40, the outer panel 40 and the inner panel 20 can be bonded to each other.

The panel bonding structure W and P described above may have the following effects.
That is, according to the panel bonding structure W and P described above, with regard to the vehicle designed as the panel van, the bearing surface portions 25 of the inner panel 20 can be set as the welding portions T1 that is bonded to the flat plate portion 31 of the outer panel 30. Thus, the inner panel 20 can be bonded to the outer panel 30 of the vehicle designed as the panel van by welding. Conversely, according to the panel bonding structure W and P described, with regard to the vehicle designed as the panel van, the bearing surface portions 25 of the inner panel 20 can be set as the adhesion control surfaces that can be brought into contact with the outer panel 40. Thus, when the bearing surface portions 25 of the inner panel 20 functioning as the adhesion control surfaces are brought into contact with the opposite flat plate portion 41 of the outer panel 40, the clearance (the adhesive T2 application portion) can be formed between the plate-shaped base body 21 of the inner panel 20 and the opposite flat surface portion 41 of the outer panel 40, so that the adhesive T2 can be fed in the clearance. Therefore, the inner panel 20 can be bonded to the outer panel 40 of the vehicle designed as the panel van via the adhesive T2.
Thus, the inner panel 20 can be bonded to the outer panel 30 of the vehicle designed as the glass van by welding (indicated by reference numeral T1). Further, the inner panel 20 can be bonded to the outer panel 40 of the vehicle designed as the panel van via the adhesive T2. Therefore, the inner panel 20 can be commonly used for the both vehicles designed as the glass van and the panel van, so as to reduce manufacturing costs.
Further, according to the panel bonding structure W and P described above, the end edge 27 of the inner panel 20 is formed as the bent-shaped portion that is capable of covering the end edge 33 of the outer panel 30 of the vehicle designed as the glass van in the bonded condition. Therefore, the end edge 33 of the outer panel 30 of the vehicle designed as the glass van can be covered by the end edge 27 of the inner panel 20, so as to not be exposed. Thus, in the vehicle designed as the glass van, the end edge 27 and 33 of the inner panel 20 and the outer panel 30 can be defined by the bent-shaped portion of the inner panel 20. Further, the outer panel 40 of the vehicle designed as the panel van has the stepped bent portion (indicated by reference numeral 43) that is spaced from the end edge 27 of the inner panel 20 in the bonded condition. Therefore, the inner panel 20 can be bonded to the outer panel 40 without interfering therewith. Thus, the inner panel 20 can be commonly used for the vehicles designed as the glass van and the panel van. In addition, in the vehicle designed as the glass van, the end edge portions 27 and 33 of the outer panel 30 and the inner panel 20 can be defined by the end edge 27 or the bent-shaped portion of the inner panel 20.
Further, in the panel bonding structure W and P described above, a plurality of bearing surface portions 25 of the inner panel 20 functioning as the welding portions T1 or the adhesion control surfaces can be formed in the plate-shaped base body 21 while being positioned separate from each other. Therefore, in the vehicles designed as the glass van and the panel van, a plurality of bonding portions can be formed in each of the outer panels 30 and 40. As a result, the inner panel 20 can be more reliably bonded to each of the outer panels 30 and 40.

The panel bonding structure of the present invention is not limited to the embodiment described above, and the embodiment can be easily changed or modified.
For example, in the panel bonding structure W and P of the embodiment described above, a plurality of bearing surface portions 25 are formed in the plate-shaped base body 21 while being positioned separate from each other at equal intervals. However, in the present invention, the bearing surface portions can be formed in the plate-shaped base body while being positioned separate from each other without being positioned at equal intervals.
Further, in the panel bonding structure W of the embodiment described above, the end edge 33 of the outer panel 30 can be covered by the end edge 27 of the inner panel 20, so as to not be exposed. However, the panel bonding structure of the present invention is not limited to such a structure. For example, the end edge 33 of the outer panel 30 and the end edge 27 of the inner panel 20 can be configured to be aligned with each other.

### DESCRIPTION OF SYMBOLS

- 10: vehicle
- 11: vehicle rear compartment
- 15: window portion
- 151: windowpane
- 152: panel window portion
- 20: inner panel
- 21: plate-shaped base body
- 25: bearing surface portion
- 27: end edge
- 30, 40: outer panel
- 31, 41: opposite flat surface portion
- 32, 42: bent-shaped portion
- 33: end edge
- 43: stepped bent portion
- W, P: panel bonding structure
- T1: welding portion
- T2: adhesive application portion

## Claims

1. A panel bonding structure for a vehicle designed as a glass van of which the side opening is provided with a glass and a vehicle designed as a panel van of which the side opening is covered by a panel, the structure being configure to bond an inner panel positioned in a vehicle interior and an outer panel positioned in a vehicle exterior each other around a circumference of an opening of the inner panel,
wherein the inner panel has a plate-shaped base body extending along a vehicle side and a ledge-shaped bearing surface portion that is swollen toward the vehicle exterior from the plate-shaped base body,
wherein in the vehicle designed as the glass van, the bearing surface portion is set as a welding portion that can be welded to the outer panel so as to bond the inner panel to the outer panel, and
wherein in the vehicle designed as the panel van, the bearing surface portion is set as an adhesion control surface that can be brought into contact with the outer panel such that a clearance into which adhesive can be fed can be formed between the plate-shaped base body and the outer panel.

2. The panel bonding structure as defined in claim 1, wherein the outer panel of the vehicle designed as the glass van has an end edge that is formed by removing the outer panel in conformity with a shape of the glass,
wherein the inner panel has an end edge portion formed as a bent-shaped portion that is capable of covering the end edge of the outer panel of the vehicle designed as the glass van in a bonded condition, and
wherein the outer panel of the vehicle designed as the panel van has a stepped bent portion corresponding to the end edge portion of the bonded inner panel.

3. The panel bonding structure as defined in claim 1 or claim 2, wherein a plurality of bearing surface portions are formed in the plate-shaped base body of the inner panel while being positioned separate from each other at intervals.
